**Europäisches Patentamt**

**European Patent Office**

**Office européen des brevets**

(19)

(11) Veröffentlichungsnummer: **0 198 384**
**A2**

## (12) EUROPÄISCHE PATENTANMELDUNG

(21) Anmeldenummer: 86104726.4

(22) Anmeldetag: 07.04.86

(51) Int. Cl.4: **G07F 7/10**

(30) Priorität: 09.04.85 DE 3512722

(43) Veröffentlichungstag der Anmeldung:
22.10.86 Patentblatt 86/43

(84) Benannte Vertragsstaaten:
AT BE CH DE FR GB IT LI NL SE

(71) Anmelder: **Siemens Aktiengesellschaft Berlin
und München**
**Wittelsbacherplatz 2**
**D-8000 München 2(DE)**

(72) Erfinder: **Krivachy, Thomas, Dr.-Phil.**
**Buchauerstrasse 39**
**D-8000 München 71(DE)**

(54) **Verfahren und Anordnung zum Verschlüsseln von Daten.**

(57) Zum Verschlüsseln von Daten unter Verwendung einer mit mindestens einem integrierten Schaltkreis versehenen Chipkarte (K) und eines an eine Rechenanlage (R) angeschlossenen Endgeräts (E) sind sowohl in der Chipkarte (K) als auch in dem Endgerät (E) Verschlüsselungseinrichtungen (V1, V2) vorgesehen. Von dem Endgerät (E) abgegebene Daten (OD) werden durch die Verschlüsselungseinrichtung (V1) auf der Chipkarte (K) mit Hilfe eines ersten Schlüssels (KC) verschlüsselt und zum Endgerät (E) übertragen. Dort werden sie durch die weitere Verschlüsselungseinrichtung (V2) mit einem weiteren Schlüssel (KT) verschlüsselt und zur Rechenanlage (R) übertragen. In der Rechenanlage (R) erfolgt eine Entschlüsselung mit beiden Schlüsseln, um die Daten (OD) des Endgeräts (E) unverschlüsselt zu erhalten. Die vom Endgerät (E) an die Chipkarte (K) abgegebenen Daten (OD) sind vorzugsweise unverschlüsselt. Die Weitergabe der verschlüsselten Daten vom Endgerät (E) zur Rechenanlage (R) erfolgt vorzugsweise erst nach einer Zwischenspeicherung im Endgerät (E) und nach einer Zusammenfassung mit von weiteren Chipkarten - (K) verschlüsselten weiteren Daten.

FIG 1

## Verfahren und Anordnung zum Verschlüsseln von Daten

Die Erfindung bezieht sich auf ein Verfahren zum Verschlüsseln von Daten entsprechend dem Oberbegriff des Patentanspruches 1. Weiterhin bezieht sich die Erfindung auf eine Anordnung zur Durchführung des Verfahrens.

Chipkarten als Identifikationskarten sind bereits allgemein bekannt. Die Chipkarten enthalten mindestens einen integrierten Schaltkreis, der als Speicherschaltkreis und/ oder als Schaltkreis mit Logikfunktionen, beispielsweise als Mikrorechner ausgebildet sein kann.

Bei der Anwendung der Chipkarten werden diese üblicherweise in ein Endgerät eingeführt, das mit einer Rechenanlage verbunden ist. Der Benutzer gibt üblicherweise in das Endgerät Daten ein, wie beispielsweise eine persönliche Identifikationsnummer, die seiner eigenen Chipkarte zugeordnet ist. Um Mißbräuche mit der Chipkarte zu verhindern, bieten die gegenwärtigen Chipkarten bereits ein hohes Maß an Sicherheit. Für manche Anwendungen, insbesondere in der Kreditwirtschaft, bei Zugriffsberechtigungen zu Bildschirmtext oder beim Abrufen von Nachrichten bei einem Mitteilungsdient ist jedoch eine weitere Erhöhung der Sicherheit durch Verschlüsseln der Daten erwünscht.

Der Erfindung liegt daher die Aufgabe zugrunde, ein Verfahren zum Verschlüsseln von Daten unter Verwendung einer Chipkarte und eines mit einer Rechenanlage verbundenen Endgeräts anzugeben, das ein hohes Maß an Sicherheit für die Benutzer der Chipkarte aufweist.

Erfindungsgemäß wird die Aufgabe bei dem Verfahren der eingangs genannten Art durch die im kennzeichnenden Teil des Patentanspruchs 1 angegebenen Merkmale gelöst.

Das Verfahren gemäß der Erfindung hat den Vorteil, daß es dem wachsenden Bedürfnis der Benutzer nach Datenschutz einerseits sowie der wachsenden Mobilität der Benutzer verbunden mit dem Wunsch nach kryptografisch gesicherter und authentifizierter Datenübertragung in öffentlichen oder innerbetrieblichen Netzen entgegenkommt. Der mobile Benutzer besitzt eine Chipkarte, die eine Identifikationskarte mit Kryptofähigkeit darstellt. Das Endgerät ist üblicherweise ortsfest, wobei unter einem ortsfesten Endgerät hier auch ein Endgerät verstanden wird, das in Verkehrsmitteln, wie beispielsweise Kraftfahrzeugen oder Flugzeugen angeordnet sein kann. Das Endgerät kann räumlich mit der Rechenanlage eine Einheit bilden, so daß es nicht unbedingt erforderlich ist, daß zwischen beiden eine Übertragungsstrecke vorhanden ist. Die mittels der Chipkarte kryptografisch gesicherten Daten werden in dem Endgerät nicht entschlüsselt, sondern sie werden durch aufeinanderfolgende Mehrfachverschlüsselung verschlüsselt und so zu der Rechenanlage übertragen.

Im Dialog zwischen dem Endgerät und der Chipkarte ist das Endgerät der aktive Teil. Die im Endgerät erzeugten Daten, beispielsweise Geldbeträge werden zur Chipkarte als Daten vorzugsweise im Klartext übertragen. Die Chipkarte empfängt diese Daten und verschlüsselt sie entsprechend einem vorgegebenen Algorithmus mit einem Schlüssel und sendet sie als verschlüsselte Daten zum Endgerät. Das Endgerät verschlüsselt die Daten mit einem weiteren Schlüssel und gibt sie dann als mehrfach verschlüsselte Daten an die Rechenanlage ab. Das Endgerät kann die Daten vor oder nach der nochmaligen Verschlüsselung zwischenspeichern und erst gemeinsam mit weiteren mehrfach verschlüsselten Daten zur Rechenanlage übertragen.

Die Algorithmen, mit denen die Daten in der Chipkarte und in dem Endgerät verschlüsselt werden, sind vorzugsweise voneinander verschieden und mit entsprechenden Algorithmen zum Entschlüsseln in der Rechenanlage symmetrisch oder unsymmetrisch.

Bei einer bevorzugten Anordnung zur Durchführung des Verfahrens enthält die Chipkarte eine erste Verschlüsselungseinrichtung, die die von dem Endgerät abgegebenen Daten verschlüsselt und das Endgerät enthält eine zweite Verschlüsselungseinrichtung, die die von der Karte abgegebenen verschlüsselten Daten nochmals verschlüsselt, um die mehrfach verschlüsselten Daten zu erzeugen, die an der Rechenanlage abgegeben werden.

Das Endgerät kann einen Zwischenspeicher enthalten, um die mehrfach verschlüsselten Daten gemeinsam mit weiteren mehrfach verschlüsselten Daten zur Rechenanlage zu übertragen.

Im folgenden wird das Verfahren gemäß der Erfindung anhand von Zeichnungen näher erläutert. Es zeigen

Fig. 1 ein Blockschaltbild einer Anordnung zur Durchführung des Verfahrens und

Fig. 2 eine schematische Darstellung des Verfahrens.

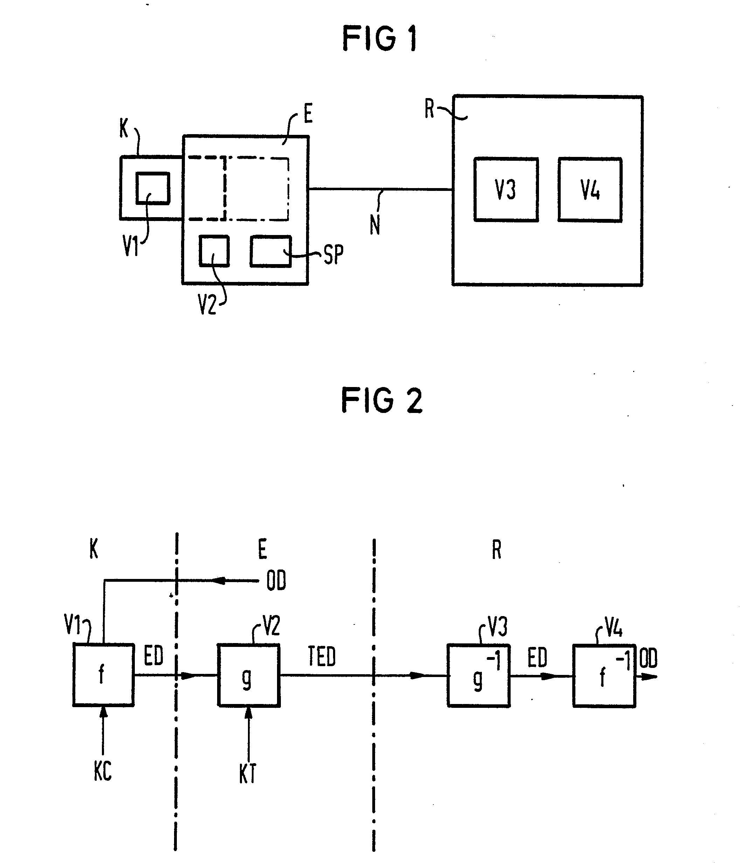

Bei der in Fig. 1 dargestellten Anordnung ist eine als Chipkarte K ausgebildete Identifikationskarte mit einer Verschlüsselungseinheit V1 vorgesehen, die in ein Endgerät E einschiebbar ist. Das Endgerät E enthält eine zweite Verschlüsselungseinrichtung V2, die vorzugsweise nach einem anderen Verschlüssungsalgorithmus arbeitet als die Verschlüsselungseinrichtung V1. Das Endgerät E ist mit einer Rechenanlage R verbunden, wobei die Verbindung über ein Netz N erfolgen kann. Die Rechenanlage R kann auch mit dem Endgerät E eine bauliche Einheit bilden, so daß die Übertragung über das Netz N entfällt. Die Rechenanlage R enthält zwei Entschlüsselungseinrichtungen V3 und V4, die die Verschlüsselungen durch die Verschlüsselungseinheiten V1 und V2 wieder rückgängig machen, wobei die Algorithmen bei der Verschlüsselung durch die Verschlüsselungseinheiten V1 und V2 und der Entschlüsselung durch die Entschlüsselungseinheiten V3 und V4 symmetrisch oder auch unsymmetrisch sein können.

Das Endgerät E enthält weiterhin einen Speicher SP, in dem die von der Chipkarte K abgegebenen verschlüsselten Daten oder die durch die Verschlüsselungseinrichtung V2 nochmals verschlüsselten Daten vor einer Übertragung zur Rechenanlage R zwischengespeichert werden können, so daß die Übertragung der mehrfach verschlüsselten Daten gemeinsam mit während einer vorgegebenen Zeitdauer vorhandenen weiteren mehrfach verschlüsselten Daten, die unter Verwendung von weiteren Chipkarten K erzeugt wurden, erfolgt.

Bei der in Fig. 2 gezeigten schematischen Darstellung des Verfahrens werden in dem Endgerät E erzeugte Daten OD, beispielsweise Geldbeträge vom Endgerät E zur Chipkarte K vorzugsweise im Klartext übertragen. Die Chipkarte K empfängt diese Daten OD und verschlüsselt sie unter Verwendung eines Schlüssels KC nach einem ersten Algorithmus f und sendet die verschlüsselten Daten ED zum Endgerät E zurück. Das Endgerät E speichert die verschlüsselten Daten ED, die von einer oder mehreren Chipkarten K empfangen wurden während eines vorgegebenen Zeitraums in dem Speicher SP und überträgt die Daten dann nach einer nochmaligen Verschlüsselung mittels eines zweiten Schlüssels KT und nach einem zweiten Algorithmus g in der Verschlüsselungseinheit V2 als mehrfach verschlüsselte Daten TED zur Rechenanlage R. In der Rechenanlage R werden aus den mehrfach verschlüsselten Daten TED die ursprünglich im Endgerät E erzeugten Daten OD unter Verwendung der beiden Entschlüsselungseinheiten V3 und V4, die nach den Algorithmen $g^{-1}$ bzw. $f^{-1}$ arbeiten, zurückgewonnen.

Anstelle der Speicherung der verschlüsselten Daten ED in dem Endgerät E können auch die mehrfach verschlüsselten Daten TED in dem Speicher SP des Endgeräts E zwischengespeichert werden. Weiterhin können in der Rechenanlage R auch andere Entschlüsselungsalgorithmen verwendet werden, die unsymmetrisch zu den Algorithmen f und g der Verschlüsselungseinheiten V1 bzw. V2 sind. Auch können die von dem Endgerät E an die Chipkarte K abgegebenen Daten OD auch verschlüsselt zur Chipkarte K übertragen werden. Die Algorithmen f und g der Verschlüsselungseinheiten V1 und V2 sind vorzugsweise voneinander verschieden und werden durch entsprechend programmierte Mikrorechner oder durch besondere integrierte Schaltkreise durchgeführt. K Chipkarte

V1 bis V4 Verschlüsselungseinheiten

E Endgerät

R Rechenanlage

N Netz

SP Speicher

OD Daten

KC, KT Schlüssel

f, g Algorithmus

ED verschlüsselte Daten

TED mehrfach verschlüsselte Daten

**Ansprüche**

1. Verfahren zum Verschlüsseln von Daten unter Verwendung einer mit mindestens einem integrierten Schaltkreis versehenen Chipkarte und eines mit einer Rechenanlage verbundenen Endgerätes, in das die Chipkarte einführbar ist, **gekennzeichnet durch** die zeitliche Aufeinanderfolge folgender Verfahrensschritte:

a) nach dem Einstecken der Chipkarte (K) in das Endgerät (E) werden von dem Endgerät (E) Daten (OD) zur Chipkarte (K) übertragen,

b) in der Chipkarte (K) werden die von dem Endgerät (E) empfangenen Daten (OD) verschlüsselt, um verschlüsselte Daten (ED) zu erzeugen,

c) die verschlüsselten Daten (ED) werden zum Endgerät (E) übertragen,

d) die verschlüsselten Daten (ED) werden im Endgerät (E) nochmals verschlüsselt, um mehrfach verschlüsselte Daten (TED) zu erzeugen,

e) die mehrfach verschlüsselten Daten (TED) werden zu der Rechenanlage (R) übertragen.

2. Verfahren nach Anspruch 1, **dadurch gekennzeichnet**, daß die im Endgerät (E) erzeugten Daten (OD) unverschlüsselt zur Chipkarte (K) übertragen werden.

3. Verfahren nach Anspruch 1 oder Anspruch 2, **dadurch gekennzeichnet**, daß die verschlüsselten Daten (ED) und/oder die mehrfach verschlüsselten Daten (TED) erst nach einer Zwischenspeicherung während einer vorgegebenen Zeitdauer zur Rechenanlage (R) übertragen werden.

4. Verfahren nach Anspruch 3, **dadurch gekennzeichnet**, daß die mehrfach verschlüsselten Daten (TED) nach der vorgegebenen Zeitdauer zusammen mit weiteren mehrfach verschlüsselten Daten von anderen Chipkarten übertragen werden.

5. Verfahren nach einem der Anspüche 1 bis 4, **dadurch gekennzeichnet**, daß die Algorithmen (f, g), mit denen die Verschlüsselung der Daten in der Chipkarte (K) und in dem Endgerät (E) erfolgt, voneinander verschieden sind.

6. Verfahren nach einem der Ansprüche 1 bis 5, **dadurch gekennzeichnet**, daß in der Rechenanlage (R) Algorithmen gespeichert sind, mit denen die Entschlüsselung der mehrfach verschlüsselten Daten (TED) und der verschlüsselten Daten (ED) möglich ist.

7. Anordnung zur Durchführung des Verfahrens nach Anspruch 1, **dadurch gekennzeichnet**, daß in der Chipkarte (K) eine erste Verschlüsselungseinrichtung (V1) vorgesehen ist, die die von dem Endgerät (E) abgegebenen Daten (OD) nach einem vorgegebenen ersten Algorithmus (f) verschlüsselt und daß in dem Endgerät (E) eine zweite Verschlüsselungseinrichtung (V2) vorgesehen ist, die die von der Chipkarte (K) abgegebenen verschlüsselten Daten (ED) nochmals verschlüsselt.

8. Anordnung nach Anspruch 7, **dadurch gekennzeichnet**, daß das Endgerät (E) einen Zwischenspeicher (SP) enthält, in dem die verschlüsselten Daten (ED) oder die mehrfach verschlüsselten Daten (TID) vor einer Übertragung zur Rechenanlage (R) zwischengespeichert werden.

# FIG 1

# FIG 2